(19) Europäisches Patentamt
European Patent Office
Office européen des brevets

(11) Veröffentlichungsnummer: **0 247 314 B1**

# (12) EUROPÄISCHE PATENTSCHRIFT

(45) Veröffentlichungstag der Patentschrift: **23.05.90**

(51) Int. Cl.⁵: **C08G 65/44**

(21) Anmeldenummer: **87104207.3**

(22) Anmeldetag: **21.03.87**

## (54) Verfahren zur Herstellung von Polyphenylenethern.

(30) Priorität: **22.05.86 DE 3617187**

(43) Veröffentlichungstag der Anmeldung: **02.12.87 Patentblatt 87/49**

(45) Bekanntmachung des Hinweises auf die Patenterteilung: **23.05.90 Patentblatt 90/21**

(84) Benannte Vertragsstaaten: **AT BE CH DE FR GB IT LI NL SE**

(56) Entgegenhaltungen:
**DE-A-2 738 889**
**DE-A-3 313 864**

(73) Patentinhaber: **HÜLS AKTIENGESELLSCHAFT, Patentabteilung / PB 15 - Postfach 13 20, D-4370 Marl 1(DE)**

(72) Erfinder: **Bartmann, Martin, Dr., Burgstrasse 35, D-4350 Recklinghausen(DE)**
Erfinder: **Ribbing, Wilfried, Dr., Heesternweg 20, D-4270 Dorsten 12(DE)**

**EP 0 247 314 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Polyphenylenether (PPE) haben als hochtemperaturbeständige Thermoplaste eine große Bedeutung erlangt. Zahlreiche Verfahren zu ihrer Herstellung sind bekannt (vgl. z. B. Bühler "Spezialplaste", Akademieverlag, Berlin, 1978). Im industriellen Bereich haben sich die Verfahren durchgesetzt, bei denen diorthosubstituierte Phenole in Gegenwart von Sauerstoff durch Kupferaminkomplexe oxidativ gekuppelt werden.

Gegenstand der DE-OS 15 70 683 ist ein Verfahren, bei dem ein Katalysator aus einem aminbasischen Kupfer-II-salz-Komplex der Formel Cu(OH)X • RR'NH, wobei X ein Säureanion, R und R' Alkylreste sind und R' zusätzlich Wasserstoff sein kann, die Rolle eines Sauerstoffüberträgers übernimmt. Ausgehend von Kupfer-II-salzen wird der aktive Komplex in Gegenwart des primären oder sekundären aliphatischen Amins beispielsweise durch Mischen eines Kupfer-II-salzes mit Kupfer-II-hydroxid oder durch Zugabe einer Base zu einem Kupfer-II-salz hergestellt. Der gleiche Komplex kann sich aber auch während der Polykondensation bilden, wenn man von einem Kupfer-I-salz und einem Amin der Formel RR'NH ausgeht und der erhaltene Komplex oxidiert wird. Komplexe dieser Amine mit nichtbasischen Kupfer-II-salzen oder Kupfer-II-hydroxid sind dagegen nicht aktiv. Mit Ausnahme der Amine, die direkt einen Arylsubstituenten am Aminstickstoff gebunden haben, sind praktisch alle Typen von primären und sekundären Mono- und Polyaminen geeignet, also beispielsweise Mono- und Dialkylamine, Mono- und Dialkenylamine, Mono- und Dibenzylamine, Mono- und Dicyclohexylamin, Mono- und Diethanolamin, Morpholin, mehrfach N-substituierte Alkylendiamine, Diethylentriamine, Cyclohexylendiamine und gegebenenfalls N-alkylierte Aminoalkylpyridine. Die Reaktion wird üblicherweise durch Zugabe einer Mineralsäure oder einer Base abgestoppt. Die DE-PS 15 70 683 eröffnete somit das erste technisch brauchbare Verfahren zur Herstellung von Polyphenylenethern.

Bei der großtechnischen Anwendung dieses Verfahrens machten sich jedoch bald Nachteile bemerkbar, die zur Entwicklung von Kupferkatalysatorkomplexen höherer Aktivität führten. Diese bestehen typischerweise (vgl. DE-OS 25 05 328, entsprechend US-PS 4 028 341) aus

- einem Kupfersalz, zumeist Kupferbromid
- einem (Erd)Alkalibromid, insbesondere dann, wenn in dem Kupfersalz kein Bromid zugegen ist
- einem sekundären Diamin wie z. B. N,N'-Di-tert. butylethylendiamin und
- einem tertiären Monoamin, beispielsweise N-Butyldimethylamin sowie gegebenenfalls
- weiteren Aminen, Phasentransfermitteln etc.

Nach dem Stand der Technik kann es als erwiesen gelten, daß Kupferbromide aktiver als Kupferchloride sind und die Aktivität von Kupferchloriden durch Zusatz von Stoffen, die Bromidionen freisetzen können, gesteigert werden kann (vgl. DE-PS 22 28 071).

Die aktivsten Kupferbromidkomplexe enthalten ein sekundäres Diamin sowie ein offenkettiges aliphatisches tertiäres Amin, wie z. B. Triethylamin oder N-substituierte Butylamine. In der DE-PS 25 05 328 wird ausdrücklich auf die Bedeutung der Anwesenheit von Bromidionen hingewiesen (vgl. Spalte 11, Zeilen 2 - 6). Die geringere Wirksamkeit von Kupferchlorid wird ebenfalls beschrieben (Spalte 7, Zeilen 56 - 59). Als bevorzugtes Kupfersalz wird daher $CuBr_2$ beansprucht (Spalte 11, Zeilen 5 - 14), das z. B. durch Reaktion von basischem Kupfercarbonat mit Bromwasserstoffsäure hergestellt wird (Spalte 14, Zeile 1 - 27). Die Verwendung von Bromwasserstoffsäure, Brom (Spalte 11, Zeilen 57 f) oder auch von $CuBr_2$ bringt jedoch erhebliche Korrosionsprobleme mit sich.

Eine Verbesserung des in der DE-PS 2 505 328 beschriebenen Katalysatorsystems auf Basis der "Bromid"-Aktivierung wird in der DE-OS 2 738 889 durch die zusätzliche Verwendung eines sekundären Monoamins erreicht. Dieses Verfahren hat jedoch neben den oben erwähnten Korrosionsproblemen noch den Nachteil, daß man im Anschluß an die oxidative Kupplung ein Amingemisch aufarbeiten muß.

Die allgemeine Lehre, daß ein Katalysatorkomplex aus einem Kupfersalz, einem sekundären Diamin, einem tertiären Monoamin und gegebenenfalls einem sekundären Monoamin durch Bromidionen aktiviert wird, geht auch aus der EP-PS 0 103 154 (Anspruch 1 in Verbindung mit Anspruch 2) hervor.

Nicht zuletzt zeigen auch Verfahren, die von der Anmelderin selbst stammen, daß Bromidionen die Aktivität des Katalysators steigern. Bei diesen Verfahren wird das Bromidion in Form des Hydrobromids des Morpholins eingebracht und Morpholin als Aminbestandteil des Kupferkomplexes empfohlen (vgl. DE-OSS 3 224 692 und 3 224 691). In der DE-OS 3 313 864 wird ein analoges Verfahren beschrieben, bei dem durch Zusatz eines Alkohols die Aktivität des Katalysators derart gesteigert wird, daß die oxidative Kupplung auch bei Durchleiten eines sauerstoffarmen Gasgemisches hinreichend schnell betrieben werden kann.

Schließlich beschreibt die DE-PS 3 314 711 die oxidative Kupplung von einwertigen Phenolen in aromatischen Lösemitteln mit Hilfe eines Katalysatorkomplexes aus einem Kupfersalz und einem sekundären Diamin. Der Einsatz von tertiären und/oder sekundären Monoaminen ist nach der Lehre dieser Schrift nachteilig (s. Vergleichsbeispiele 2 und 3).

Die Verwendung von (Erd)Alkalibromiden zur Aktivierung des Katalysatorkomplexes führt zu Komplikationen bei der Aufarbeitung, da die Anwesenheit von Bromidionen im Endprodukt dessen Qualität außerordentlich nachteilig beeinflußt.

Es ist bereits aus der US-PS 4 385 167 bekannt, daß bei Katalysatoren auf Basis von Kupfersalzen und Alkalimetallbromiden Schwierigkeiten auftreten. Zur behebung dieser Schwierigkeiten wird vorgeschlagen, Sulfite oder Bisulfite dem Katalysator zuzusetzen.

Die EP-OS 0 150 022 offenbart einen reinen kristallinen Komplex aus einwertigem Kupfer, einem N,N'-disubstituierten Ethylendiamin und einem Phenolatrest. Dieser Komplex ist nur unter Ausschluß von Feuchtigkeit und Sauerstoff herstellbar und ebenfalls für die oxidative Kupplungsreaktion von diorthosubstituierten Phenolen geeignet.

Ziel der vorliegenden Erfindung war es, ein Verfahren zur Herstellung von PPE zu entwickeln, bei dem man ohne Bromidionen auskommt und somit die mit deren Einsatz verbundenen Korrosionsprobleme vermeidet, ohne daß die Aktivität des Katalysators jedoch darunter leiden sollte.

Die Verwendung von Sauerstoff als Oxidationsmittel birgt - neben den im Vergleich zu Luft höheren Kosten - das Risiko einer Explosionsgefahr in sich. Viele Verfahren des Standes der Technik sind aber auf Sauerstoff angewiesen, bei anderen sinkt die Reaktionsgeschwindigkeit drastisch ab, wenn man zu Luft übergeht, so daß daß die PPE-Herstellung unwirtschaftlich wird.

Ein weiteres Ziel der vorliegenden Anmeldung war es daher, bei der oxidativen Kupplungsreaktion nicht auf Sauerstoff und sauerstoffangereicherte Gasgemische angewiesen zu sein.

Es wurde jetzt überraschend gefunden, daß unter bestimmten Bedingungen ein Kupferchloridkatalysator aktiver ist als ein analoger Kupferbromidkatalysator. Dieser Befund steht im Gegensatz zu allen bisherigen Kenntnissen über die Aktivität von Katalysatoren zur oxidativen Kupplung von PPE.

Gegenstand der vorliegenden Erfindung ist ein Verfahren zur oxidativen Kupplungsreaktion von Phenolen der allgemeinen Formel

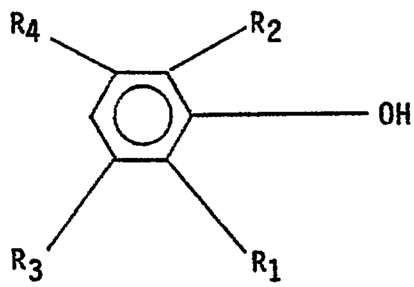

mit $R_3$, $R_4$ = H, $CH_3$
wobei $R_1$ und $R_2$ entweder die Bedeutung von n- oder i-Alkylresten mit 1 bis 6 C-Atomen haben oder $R_1$ für Wasserstoff und $R_2$ für einen tertiären Alkylrest mit 4 bis 6 C-Atomen steht.

Dieses Verfahren ist durch folgende Merkmale gekennzeichnet:

1. Als Kupfersalz setzt man Kupfer(I)-chlorid oder vorzugsweise Kupfer-(II)-chlorid ein.
2. Als Aminbestandteil des Katalysators verwendet man ein sekundäres Diamin der Formel

$R_b$ - NH - $R_a$ - NH - $R_c$ ,

wobei $R_a$ ein zweiwertiger $C_{2-4}$-Alkylenrest ist und
$R_b$ und $R_c$ sekundäre und tertiäre Alkylreste mit bis zu 10 C-Atomen sind,
und Morpholin.

3. Als Lösemittel verwendet man ein Gemisch aus einem aromatischen $C_{6-8}$-Kohlenwasserstoff und einem aliphatischen $C_{1-4}$-Alkohol im Volumenverhältnis 92,5 : 7,5 bis 50 : 50.

Obwohl alle Verfahrensmerkmale, isoliert gesehen, bekannt sind, führt ihre Kombination zu einem überraschenden Ergebnis, wie aus den folgenden Vorteilen dieses Verfahrens ersichtlich wird:

1. Man benötigt weder Kupferbromid noch (Alkali)Metallbromide, die stark korrosionsfördernd wirken. Überraschenderweise erhält man mit Kupferbromid sogar schlechtere Ergebnisse (siehe Vergleichsbeispiel A)
2. Man kann das Kupferchlorid sowohl in wasserfreier wie in wasserhaltiger Form einsetzen.
3. Der entstehende Kupferkomplex ist so aktiv, daß man anstelle von reinem Sauerstoff auch Gemische von Sauerstoff mit Inertgasen verwenden kann, sofern der Anteil des Sauerstoffs in diesen Gemischen mindestens 10 Volumenprozent beträgt.
4. Nach dem vorliegenden Verfahren erhält man besonders reine Produkte. Insbesondere wird die Bildung stark gefärbter Nebenprodukte weitgehend unterbunden.
5. Überraschenderweise ist ein Katalysator, bestehend aus Kupfer(II)-chlorid, Di-tert-butylethylendiamin und Morpholin, deutlich aktiver als ein analoger Katalysator, bei dem an Stelle des Morpholins

andere aliphatische oder heterocyclische Diamine eingesetzt werden (siehe Vergleichsversuche B, C, D, E, F und G). Morpholin als einziger Aminbestandteil ergibt ebenfalls erheblich schlechtere Ergebnisse, wie aus der langen Polykondensationszeit ersichtlich ist (siehe Vergleichsbeispiel I).

6. Ein Gemisch aus Morpholin und dem sekundären Diamin ist problemlos auf destillativem Wege zu trennen.

Als Phenol kommt in erster Linie 2,6-Dimethylphenol infrage. Grundsätzlich sind jedoch auch andere o, o'-Dialkylphenole geeignet, deren Alkylreste jeweils höchstens 6 C-Atome besitzen und kein alphaständiges tertiäres C-Atom aufweisen dürfen. Ferner eignen sich Phenole, die lediglich in einer ortho-Stellung durch einen tertiären $C_{4-6}$-Alkylrest, insbesondere einen tertiären Butylrest, substituiert sind.

Jeder der angegebenen Phenole kann in 3-Stellung, gegebenenfalls auch in 5-Stellung, durch eine Methylgruppe substituiert sein. Selbstverständlich können auch Gemische der hier erwähnten monomeren Phenole eingesetzt werden.

Als Lösemittel verwendet man Gemische aus Aromaten mit 6 bis 9 C-Atomen, wie z. B. Benzol oder Toluol, und Alkoholen mit bis zu 6 C-Atomen, wie z. B. Ethanol oder Methanol, im Volumenverhältnis Aromat/Alkohol von 92,5 : 7,5 bis 50 : 50 mit der Maßgabe, daß während der oxidativen Kupplungsreaktion kein PPE ausfallen soll. Bevorzugt sind Lösemittelgemische aus Methanol und Toluol im Volumenverhältnis 10 : 90 bis 15 : 85. Bezogen auf 1 Volumenteil monomeres Phenol werden 1 bis 10 Volumenteile Lösemittel eingesetzt.

Der aktive Katalysator besteht aus:

- Kupfer(II)-chlorid
- einem sekundären Diamin der Formel $R_b$ - NH - $R_a$ - NH - $R_c$
- Morpholin

Er kann entweder in situ durch Zugabe der einzelnen Komponenten hergestellt werden oder auch getrennt zubereitet und der Lösung des Phenols zugesetzt werden.

Das Kupfer(II)-chlorid kann sowohl in hydratisierter Form wie auch in wasserfreier Form eingesetzt werden. Kupfer(I)-chlorid muß erst in einer Vorreaktion in die zweiwertige Form überführt werden.

Bei dem sekundären Diamin handelt es sich um ein Alkylendiamin mit 2 bis 4 C-Atomen, insbesondere Ethylendiamin, dessen beide Stickstoffe durch jeweils eine sekundäre oder tertiäre Alkylgruppe mit bis zu 10 C-Atomen, insbesondere die Isopropyl- oder tert.-Butylgruppe, substituiert sind.

Pro Mol umzusetzendem Phenol setzt man zweckmäßigerweise 1 bis 15 mmol $CuCl_2$, 1 bis 15 mmol des sekundären Diamins und 0,1 bis 1 Mol Morpholin ein.

Als Oxidationsmittel kommen Sauerstoff und sauerstoffhaltige Gasmischungen infrage, die mindestens 10 Volumenprozent Sauerstoff enthalten. Da der Einsatz von Sauerstoff infolge der Möglichkeit zur Ausbildung explosiver Gasgemische nicht unproblematisch ist, werden vorzugsweise Gasgemische aus Sauerstoff und einem Inertgas eingesetzt, die zwischen 10 und 40 Volumenprozent Sauerstoff enthalten. Geeignete Inertgase sind insbesondere Sickstoff, Helium und Argon. Kohlendioxid ist bei dieser Reaktion kein Inertgas. Es wirkt störend. Daher empfiehlt es sich, Gasgemische einzusetzen, die weniger als 300 ppm, vorzugsweise weniger als 10 ppm, Kohlendioxid enthalten. Insbesondere können also Sauerstoff-Stickstoff-Gasgemische verwendet werden, aus denen man auf bekannte Weise Kohlendioxid abgetrennt hat.

Die Reaktion wird üblicherweise bei einer Temperatur zwischen 20 und 80 °C, insbesondere 30 bis 50 °C, durchgeführt.

<u>Beispiel 1</u>

Eine Lösung von 1,5 g $CuCl_2 \cdot 2\,H_2O$ in 20 g Methanol wird in einem 3 l Reaktor unter Rühren (750 U/min) und unter Durchleiten von Stickstoff (100 l/h) mit einer Mischung aus 1 300 g Toluol, 177 g Methanol, 30 g Morpholin und 1,5 g N,N'-Di-tert.-butylethylendiamin (DitbDi) vereinigt. Nach 5 Minuten wird die Stickstoff-Zufuhr durch einen Luftstrom von 100 l/h ersetzt. Daraufhin tropft man über einen Zeitraum von 30 Minuten eine Lösung aus 150 g 2,6-Dimethylphenol in 150 g Toluol zu und hält eine Reaktionstemperatur von 30 ± 1 °C ein. Nach 55 Minuten reduziert man den Luftstrom auf 40 l/h. Nach einer Polykondensationszeit von 70 Minuten wird eine Probe mit 50 %iger Essigsäure gestoppt und das Polymere nach Abtrennen der wäßrigen Phase durch Fällung mit Methanol isoliert.

J = 55 $cm^3$/g (0,5 %ig in Chloroform)

<u>Beispiel 2</u>

Analog zu Beispiel 1 wird eine Polykondensation von 2,6-Dimethylphenol durchgeführt. Der einzige Unterschied zur Vorgehensweise nach Beispiel 1 besteht darin, daß als Oxidationsmittel synthetische Luft mit einem $CO_2$-Gehalt von weniger als 10 ppm Kohlendioxid eingesetzt wird. Nach einer Polykondensationszeit von 65 Minuten ist ein J-Wert von 55 $cm^3$/g in einer 0,5 %igen Chloroformlösung erreicht.

In der nachfolgenden Tabelle sind die Polykondensationszeiten, die zur Erreichung eines J-Wertes von 55 $cm^3/g$ notwendig waren, und die Variationen der analog Beispiel 1 durchgeführten Versuche aufgeführt.

Tabelle: Ergebnisse weiterer Beispiele bzw. Vergleichsversuche

| Beispiel 1 | Kupfersalz | DitbDi | Monoamin | Pk-Zeit |
|---|---|---|---|---|
| 3 | $CuCl_2 \cdot 2\,H_2O$ 0,75 g | 0,75 g | 30 g | 92 |
| Vergleichsversuch A | $CuBr_2$ aus: $CuCO_3 \cdot Cu(OH)_2$ 0,5 g und HBr (48% ig) 1,4 g | 0,75 g | Morpholin 30 g | 115 |
| Vergleichsversuch B | $CuCl_2 \cdot 2\,H_2O$ 0,75 g | 0,75 g | Piperidin 30 g | 140 |
| Vergleichsversuch C | $CuCl_2 \cdot 2\,H_2O$ 0,75 g | 0,75 g | Pyrrolidin 25 g | 150 |
| Vergleichsversuch D | $CuCl_2 \cdot 2\,H_2O$ 0,75 g | 0,75 g | Diisopropylamin 34 g | › 150 nach 15 Minuten J = 15 |

| Beispiel | Kupfersalz | DitbDi | Monoamin | PK-Zeit |
|---|---|---|---|---|
| Vergleichsversuch E | $CuCl_2 \cdot 2\,H_2O$ 0,75 g | 0,75 g | Diethylamin 25 g | › 150 nach 150 Minuten = 25 |
| Vergleichsversuch F | $CuCl_2 \cdot 2\,H_2O$ | 0,75 g | Di-n-butyl-amin | 120 |
| Vergleichsversuch G | $CuCl_2 \cdot 2\,H_2O$ 0,75 g | 0,75 g | Triethylamin 30 g | 140 |
| Vergleichsversuch H | $CuCl_2 \cdot 2\,H_2O$ 0,75 g | 0,75 g | kein zusätzliches Amin | es wird nur Tetramethyldiphenochinon gebildet |
| entspricht DE-PS 3 314 711 | | | | |
| Vergleichsversuch I | $CuCl_2 \cdot 2\,H_2O$ 0,75 g | | Morpholin 30 g | 140 |

<u>Beispiel 4</u>

Ein Gemisch aus 135 g 2,6-Dimethylphenol und 17 g 2,3,6-Trimethylphenol wird analog zu Beispiel 1 oxidiert. Zur Erreichen eines J-Wertes von 55 $cm^3/g$ war eine PK-Zeit von 75 Minuten erforderlich.

<u>Beispiel 5</u>

Man verfährt wie in Beispiel 1, jedooh werden an Stelle von DitbDi 1,4 g N,N'-Di-isopropylethylendiamin eingesetzt. Die PK-Zeit zum Erreichen eines J-Wertes von 55 $cm^3/g$ beträgt 100 Minuten.

<u>Beispiel 6</u>

Man verfährt wie in Beispiel 1, jedoch werden an Stelle von DitbDi 1,6 g N,N'-Di-tert.butylpropandiamin-1,3 eingesetzt. Die PK-Zeit zum Erreichen eines J-Wertes von 55 $cm^3/g$ beträgt 68 Minuten.

Beispiel 7

Man verfährt wie in Beispiel 3, jedoch setzt man als Lösemittel ein Gemisch aus 1 200 g Toluol und 296 g Methanol ein. Die PK-Zeit zum Erreichen eines J-Wertes von 55 $cm^3/g$ beträgt 93 Minuten.

Vergleichsbeispiel J

Man verfährt wie in Beispiel 1, jedoch setzt man an Stelle von Kupferchlorid 2 g Kupferbromid ein, das man aus 1,0 g $Cu(OH)_2 \cdot CuCO_3$ und 2,65 g 40%iger wäßriger Bromwasserstoffsäure gewonnen hat, und verwendet 1,5 g N,N'-Di-isopropylethylendiamin an Stelle der gleichen Menge DitbDi. Die PK-Zeit zum Erreichen eines J-Wertes von 55 $cm^3/g$ beträgt 120 Minuten.

Vergleichsbeispiel K

Man verfährt wie in Vergleichsversuch A, setzt jedoch als Lösemittel ein Gemisch aus 1 200 g Toluol und 296 g Methanol ein. Die PK-Zeit zum Erreichen eines J-Wertes von 55 $cm^3/g$ beträgt 115 Minuten.

**Patentansprüche**

1. Verfahren zur Herstellung von Polyphenylenethern durch oxidative Kupplungsreaktion von Phenolen der allgemeinen Formel

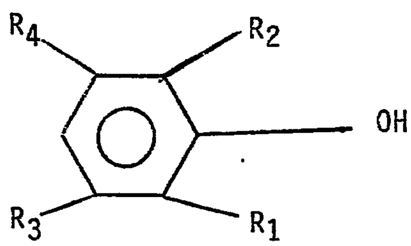

mit $R_3$, $R_4$ = H, $CH_3$
und $R_1$, $R_2$ = n-, i-$C_{1-6}$-Alkyl
oder $R_1$ = H und $R_2$ = $C_{4-6}$-tert.-Alkyl
mit Sauerstoff oder Sauerstoff enthaltenden Gasgemischen in einem organischen Lösemittel in Gegenwart eines aus einem Kupfersalz und einem Aminbestandteil gebildeten Kupferaminkatalysators, dadurch gekennzeichnet, daß man
– als Kupfersalz Kupfer(I)-chlorid, das in einer Vorreaktion in die zweiwertige Form überführt wird, oder vorzugsweise Kupfer(II)-chlorid,
– als Aminbestandteil des Katalysators ein sekundäres Diamin der Formel

$R_b$ - NH - $R_a$ - NH - $R_c$

mit $R_a$ = $C_{2-4}$-Alkylen
$R_b$, $R_c$ = sek. oder tert. Alkylrest mit maximal 10 C-Atomen und Morpholin, und
– als organisches Lösemittel ein Gemisch aus einem aromatischen $C_{6-8}$-Kohlenwasserstoff und einem aliphatischen $C_{1-4}$-Alkohol im Volumenverhältnis 92,5:7,5 bis 50:50 einsetzt.

2. Verfahren nach Anspruch 1, dadurch gekennzeichnet, daß man als sekundäres Diamin N,N'-Di-tert.-butylethylendiamin einsetzt.

3. Verfahren nach den Ansprüchen 1 und 2, dadurch gekennzeichent, daß man pro Mol Phenol
1 - 15 mmol $CuCl_2 \cdot 2\ H_2O$
1 - 15 mmol N,N'-Di-tert.-butylethylendiamin
0,1 - 1 Mol Morpholin
einsetzt.

4. Verfahren nach den Ansprüchen 1 bis 3, dadurch gekennzeichnet, daß man als Oxidationsmittel ein Sauerstoff-Inertgas-Gemisch mit 10 bis 40 Volumenprozent Sauerstoff einsetzt.

5. Verfahren nach Anspruch 4, dadurch gekennzeichnet, daß man ein Gasgemisch einsetzt, dessen Kohlendioxidgehalt unter 300 ppm Volumenprozent, vorzugsweise unter 10 ppm, liegt.

6. Verfahren nach den Ansprüchen 1 bis 5, dadurch gekennzeichnet, daß man als organisches Lösemittel ein Gemisch aus Toluol und Methanol im Volumenverhältnis 90 : 10 bis 85 : 15 einsetzt.

7. Verfahren nach den Ansprüchen 1 bis 6, dadurch gekennzeichent, daß man als Phenolmonomeres 2,6-Dimethylphenol einsetzt.

**Claims**

1. A process for preparing polyphenylene ethers by an oxidative coupling reaction of phenols of the general formula

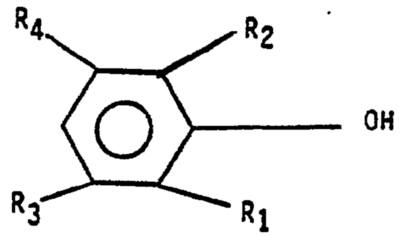

in which $R_3$, $R_4$ = H, $CH_3$
and $R_1$, $R_2$ = n-, iso-$C_{1-6}$-alkyl
or $R_1$ = H and $R_2$ = $C_{4-6}$-tert-alkyl
with oxygen or gaseous mixtures containing oxygen in an organic solvent in the presence of a copper-amine catalyst formed from a copper salt and an amine component, characterized in that
– copper(I) chloride which is converted into the divalent form in a preliminary reaction, or preferably copper(II) chloride, is used as the copper salt,
– a secondary diamine of the formula

$R_b$ - NH - $R_a$ - NH - $R_c$

in which $R_a$ = $C_{2-4}$-alkylene
$R_b$, $R_c$ = secondary or tertiary alkyl radical having a maximum of 10 C atoms, and morpholine are used as the amine component of the catalyst, and
– a mixture of an aromatic $C_{6-8}$-hydrocarbon and an aliphatic $C_{1-4}$-alcohol in the ratio of 92.5:7.5 to 50:50 by volume is used as the organic solvent.

2. A process according to claim 1, characterized in that N,N`-di-tert-butylethylenediamine is used as the secondary diamine.

3. A process according to either of claims 1 and 2, characterized in that
1–15 mmol of $CuCl_2 \cdot 2\ H_2O$
1–15 mmol of N, N`-di-tert-butylethylenediamine
0.1–1 mol of morpholine
are used per mol of phenol.

4. A process according to any of claims 1 to 3, characterized in that an oxygen/inert gas mixture having 10 to 40 per cent by volume of oxygen is used as the oxidizing agent.

5. A process according to claim 4, characterized in that a gaseous mixture is used whose carbon dioxide content is below 300 ppm by volume, preferably below 10 ppm.

6. A process according to any of claims 1 to 5, characterized in that a mixture of toluene and methanol in the ratio of 90:10 to 85:15 by volume is used as the organic solvent.

7. A process according to any of claims 1 to 6, characterized in that 2,6-dimethylphenol is used as the phenol monomer.

**Revendications**

1. Procédé pour la préparation d'éthers polyphényléniques par réaction oxydante de copulation de phénols de la formule générale

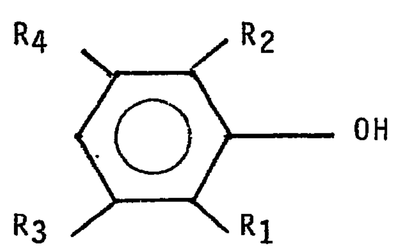

avec $R_3$, $R_4$ = H, $CH_3$
et $R_1$, $R_2$ = un n- ou iso-alkyle en $C_1$ à $C_6$
ou $R_1$ = H et $R_2$ = un alkyle tertiaire en $C_4$ à $C_6$

sur de l'oxygène ou des mélanges renfermant de l'oxygène, dans un solvant organique, en présence d'un catalyseur cuivre-amine formé à partir d'un sel de cuivre et d'un composant amine, caractérisé par le fait que l'on utilise

– comme sel de cuivre du chlorure de cuivre-(I) qui est réduit dans une pré-réaction à la forme bivalente ou, de préférence, du chlorure de cuivre-(II),

– comme composant amine du catalyseur une diamine secondaire de formule

$R_b$ - NH - $R_a$ - NH - $R_c$

avec $R_a$ = un alkylène en $C_2$ à $C_4$

$R_b$, $R_c$ = un radical alkyle secondaire ou tertiaire comportant au maximum 10 atomes de carbone et de la morpholine, et

– comme solvant organique un mélange constitué d'un hydrocarbure aromatique en $C_6$ à $C_8$ et d'un alcool aliphatique en $C_1$ à $C_4$ dans un rapport volumique de 92,5:7,5 à 50:50.

2. Procédé selon la revendication 1, caractérisé par le fait que l'on utilise comme amine secondaire de la N,N-di-tert.-butyl-éthylène-diamine.

3. Procédé selon les revendications 1 et 2, caractérisé par le fait que l'on utilise par mole de phénol:
1 à 15 mmoles de $CuCl_2 \cdot 2\ H_20$
1 à 15 mmoles de N,N'-di-tert.-butyl-éthylène-diamine
0,1 à 1 mole de morpholine.

4. Procédé selon les revendications 1 à 3, caractérisé par le fait que l'on utilise, comme agent d'oxydation, un mélange d'oxygène et de gaz inerte avec 10 à 40% en volume d'oxygène.

5. Procédé selon la revendication 4, caractérisé par le fait que l'on utilise un mélange gazeux dont la teneur en dioxyde de carbone est inférieure à un pourcentage en volume de 300 ppm, de préférence inférieure à 10 ppm.

6. Procédé selon les revendications 1 à 5, caractérisé par le fait que l'on utilise, comme solvant organique, un mélange constitué de toluène et de méthanol dans un rapport volumique de 90:10 à 85:15.

7. Procédé selon les revendications 1 à 6, caractérisé par le fait que l'on utilise comme monomère phénolique du 2,6-diméthylphénol.